# EUROPEAN PATENT SPECIFICATION

(11) **EP 2 675 132 B1**
(45) Date of publication and mention of the grant of the patent: **27.03.2019**
(21) Application number: 13171122.8
(22) Date of filing: 07.06.2013
(51) Int. Cl.: H04L 29/06

(54) **System for dynamic stream management in audio video bridged networks**
System zur dynamischen Flussverwaltung in Audio-Video- überbrückten Netzwerken
Système de gestion de flux dynamique dans des réseaux pontés audio vidéo

(30) Priority: 13.06.2012 US 201213495426
(43) Date of publication of application: 18.12.2013
(73) Proprietor: HARMAN INTERNATIONAL INDUSTRIES, INCORPORATED, Northridge California 91329 (US)
(72) Inventor: Joy, Lejin, 560068 Bangalore (IN); Ramachandra, Nagaprasad, Karnataka (IN); Krishnan, Anantha B.S., 56001 Bangalore (IN); Baalu, Arvin, Bangalore (IN)
(74) Representative: Westphal, Mussgnug & Partner Patentanwälte mbB

(56) References cited:
- EP-A1- 1 998 508
- US-A1- 2005 223 087
- US-A1- 2007 201 446
- US-A1- 2008 037 457
- US-A1- 2010 220 588
- PRIHANDOKO F ET AL: "Adaptive call admission control for QoS provisioning in multimedia wireless networks", COMPUTER COMMUNICATIONS, ELSEVIER SCIENCE PUBLISHERS BV, AMSTERDAM, NL, vol. 26, no. 14, 1 September 2003 (2003-09-01), pages 1560-1569, XP004438905, ISSN: 0140-3664, DOI: 10.1016/S0140-3664(02)00282-7

## Description

### BACKGROUND OF THE INVENTION

### 1. Technical Field.

This invention relates to an Ethernet Audio-Video Bridging ("AVB") network, and more particularly to managing data streams when bandwidth is consumed.

### 2. Related Art.

Audio/video ("A/V") data may be transmitted in a network system from a source endpoint to a destination endpoint. To reach the destination endpoint, the data may pass through bridges located in the network. When a bridge receives the data, the bridge may determine a next location (e.g., a next bridge) to send the data. The time taken for the bridge to receive the data, determine where to send the data, and send the data to the next location is a time delay or a latency that increases the total time that elapses for the data to reach the destination endpoint. The publication EP 1 998 508 A1 describes an approach for admitting or refusing a request for transmission with a specified bandwidth rate on a communications channel in the context of a telecom system. The publication F. Prihandoko, M.H. Habaebi, B.M. Ali, Adaptive call admission control for QoS provisioning in multimedia wireless networks, in: Computer Communications, Vol. 26; No. 14, pp. 1560-1569, proposes a framework to guarantee quality of service of multimedia traffic generally classified as real-time and non-real-time. The publication US 2005/0223087 A1 relates to quality driven streaming of data from a source to a destination in a closed network. The publication US 2007/0201446 A1 describes an approach for dynamically allocating bandwidth of a subscriber line that carries voice over internet protocol (VoIP) calls and internet protocol television (IPTV) transmissions. The publication US 2010/0220588 A1 describes a method for providing proxy-based quality of service (QoS). Finally, the publication US 2008/0037457 A1 describes a relay method for relaying transmission among wireless terminals with a limited bandwidth.

### SUMMARY

A network communication system may include one or more talkers that are configured to transmit data streams over a network to one or more listeners. Before transmitting a new data stream, a talker may request a reservation for bandwidth for the new data stream. If enough bandwidth is available, the reservation may be made and the new data stream may be transmitted over the network. In some example configurations, the reservation may be performed using and/or in accordance with a standard or protocol. For example, the network may be an Audio-Video Bridging (AVB) network, and reservations may be made in accordance with the Institute of Electrical and Electronics Engineers (IEEE) 802.1Qat Stream Reservation Protocol (SRP).

The network communication system may further include a controller that is configured to control and/or handle stream management of the data streams. To do so, reservations may be performed through the controller. When a talker wants to transmit a new data stream, the talker may be configured to send information associated the new data stream to the controller. The information may include identification information, such as a stream ID, a talker ID, and a listener ID. The information may also include a priority of the new data stream and one or more attributes or capabilities of the new data stream, such as frame rate, sample size, resolution, and/or bit rate, as examples.

In response to receiving the information from the talker, the controller determines whether there is sufficient bandwidth for the new data stream to be transmitted over the network according to the apparatus described in the independent claim 12. A corresponding method is described in the independent claim 1. Further detailed embodiments are defined in the dependent claims.

### BRIEF DESCRIPTION OF THE DRAWINGS

The system may be better understood with reference to the following drawings and description. The components in the figures are not necessarily to scale, emphasis instead being placed upon illustrating the principles of the invention. Moreover, in the figures, like referenced numerals designate corresponding parts throughout the different views.
Fig. 1 is a block diagram of an example network communication system.
Fig. 2 is a diagram of an example table that may include information associated with one or more data streams.
Fig. 3 is a diagram of an alternative example table that may include information associated with one or more data streams.
Fig. 4 is a flow diagram of an example method of determining whether a configuration of data streams may be modified to make available bandwidth for a new data stream to be transmitted.
Fig. 5 is an example of a computer processing system for use with one or more components in the network communication system.

### DETAILED DESCRIPTION OF THE PREFERRED EMBODIMENTS

Demand for connectivity between network devices continues to increase at a fast rate. In many systems, a greater number of devices are being manufactured which have network connection and/or communication capabilities. For example, in some automobiles, components not previously considered connective are being manufactured with connective capabilities. Parts, such as brakes, throttle, and/or various other parts, may be manufactured as Ethernet Audio-Video Bridging ("Ethernet AVB") enabled devices which may communicate through an Ethernet AVB network. In some systems, Ethernet AVB networks may be used to connect one or more devices, with audio and/or video data streams being sent wirelessly and/or through a wireline, such as an Ethernet cable.

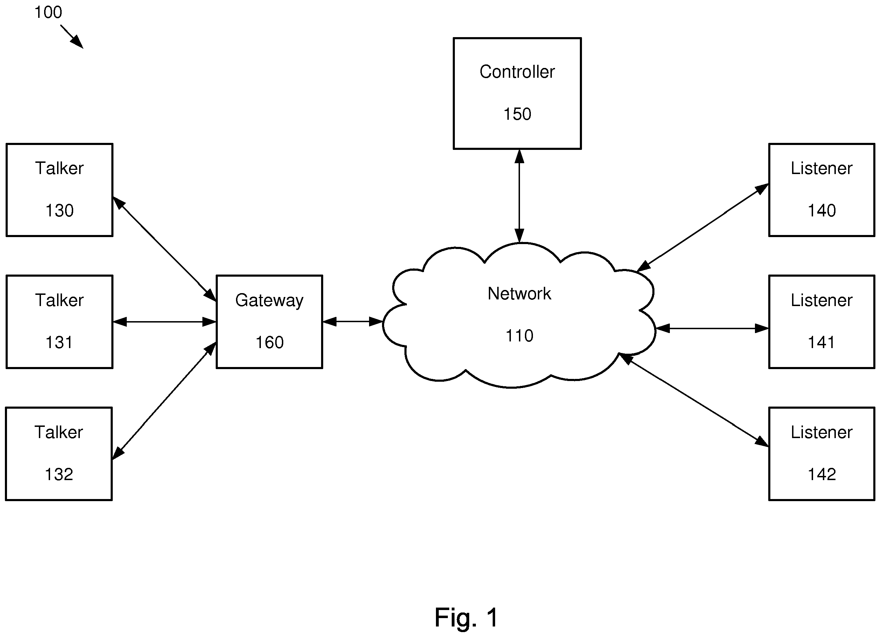

Fig. 1 illustrates an example network communication system 100 that may include a plurality of electronic devices, including electronic devices 130, 131, 132, 140, 141,142, and 150. More or fewer electronic devices may be included. One or more of the electronic devices 130, 131, 132, 140, 141,142, 150 may be in communication with one or more of the other electronic devices over the network 110. In addition, each electronic device 130, 131, 132, 140, 141,142, 150 may be configured to perform one or more roles. The roles may include the role of a talker, the role of a listener, the role of a controller, and/or any combination of these three roles.

The role of the talker may be to transmit information and/or data across the network 110. Alternatively or in addition, the role of the talker may be to establish, create, and/or reserve a connection for the transmission of a data stream carrying the information and/or data. Alternatively or in addition, the role of the talker may be to remove or tear down the connection. The role of the listener may be to receive the information and/or the data that has been sent over the network 110. Alternatively or in addition, the role of the listener may be to connect to and/or reserve connection to the data stream. Alternatively or in addition, the role of the listener may be to remove connection from the data stream.

The role of the controller may be to control the flow of data streams between talkers and listeners. The controller may create and/or remove connections of the data streams between the talkers and the listeners. In addition, the controller may manage, handle, and/or determine priorities of the data streams. Also, the controller may manage, handle, control, assign, allocate, adjust, and/or determine the bandwidth assigned to and/or consumed by the data streams. In addition or alternatively, the controller may register information about and/or that identifies the talkers, the listeners, and/or the data streams established between the talkers and the listeners. Additionally, the controller may maintain a table, list, record, and/or database of the data streams and/or characteristics or properties associated with the data streams. The controller may control the flow of the data stream by sending one or more messages, such as control messages, to the talkers and/or the listeners to create a connection and/or remove the connection of the data streams between a talker and one or more listeners. The controller may include and/or the messages may be communicated from the controller to the talkers and/or the listeners through a high-level application layer of the talker and/or the listeners. Other roles may be included.

The electronic devices 130, 131, 132, 140, 141,142, 150 may be configured to switch between or change roles. For example, in one situation, one of the electronic devices may be configured to be a talker, and in another situation, the electronic device may be configured to be a listener. In yet another situation, the electronic device may be configured to be both a talker and a listener.

The electronic devices 130, 131, 132, 140, 141,142, 150 may be configured to perform different roles in different situations or at different times. For example, in one situation, one of the electronic devices may be configured to be a talker. In a different situation, that electronic device may be configured to be a listener. Alternatively, the roles that the electronic devices 130, 131, 132, 140, 141,142, 150 may be configured to perform may be fixed. For the following description, the electronic devices 130, 140, 141, and 150 in the system 100 are designated the roles of the talker, the listener, and the controller, as previously described. The electronic devices 130, 131, 132 are configured as the talker, the electronic devices 140, 141, 142 are configured as the listeners, and the electronic device 150 is configured as the controller. In an alternative communication network system, other roles may be designated. In addition, in an alternative system, there may be more or fewer than three talker 130, 131, 132, more or fewer than three listeners 140, 141, 142 and/or more than one controller 150. In still other examples, one or more of the electronic devices 130, 131, 132, 140, 141, 142, 150 may perform as a talker or a listener while also being a controller.

The network 110 may be, include, and/or communicate through or with an Ethernet AVB network. The electronic devices in the communication system 100, including the talkers 130, 131, 132, the listeners 140, 141, 142, and/or the controller 150 may communicate over the network 100 using various protocols designated by the Institute of Electrical and Electronics Engineers (IEEE), including IEEE 802.1AS-2011 (gPTP) for network timing and synchronization, IEEE 802.1Qav-2009 for queuing and forwarding streaming data, IEEE 802.1Qat-2010 (Stream Reservation Protocol (SRP)) for reserving data stream bandwidth in a network, and/or IEEE 1722-2011 related to a possible data streaming format. Various other protocols may be used. Alternatively or additionally, the network 110 may be, include, and/or communicate through or with wide area networks (WAN), such as the Internet, local area networks (LAN), campus area networks, metropolitan area networks, or any other wireless and/or wireline networks that may allow for data communication. The network 110 may be divided into sub-networks. The sub-networks may allow access to all of the components connected to the network 110, or the sub-networks may restrict access between the components connected to the network 110. The network 110 may be a public or private network and may include, for example, a virtual private network, an encryption, or any other security mechanism employed over the public Internet, or the like. Various other types of networks 110 are possible.

One or more of the talkers 130, 131, 132, the listeners 140, 141, 142, and/or the controller 150 may be connected to the network 110, such as an Ethernet AVB network, in any configuration that supports data transfer. This may include a data connection to the network 110 that may be wired or wireless. One or more of the talkers 130, 131, 132, the listeners 140, 141, 142, and/or the controller 150 may be connected to the network 110 and/or to each other through or with an Ethernet connection, such as using a cable or wireless connection to an Ethernet AVB network. Various other connections may be possible. In addition, in some example configurations, the talkers 130, 131, 132 may be connected to a gateway 160 to connect to the network 110. The gateway 160 may provide a single connection to the network 110. In other example configurations, the network system 100 may not include the gateway 160, and instead, the talkers 130, 131, 132 may be connected directly to the network 110.

In an alternative network configuration, the talkers 130, 131, 132 may not be configured to communicate with the controller 150 over the network 110. Instead, the talkers 130, 131, 132 may be configured to communicate with the controller 150 over a wired or wireless non-network communication. In addition or alternatively, in example configurations where the gateway 160 is present, the controller 150 may be configured to communicate with the listeners 140, 141, 142 over the network 110 by being configured to communicate with the gateway 160, which receives messages and/or signals from the controller 150 and transmits the messages and/or signals from the controller 150 over the network 110. In alternative configurations where the gateway 160 is not present, the controller 150 may be connected directly to the network 110.

The talkers 130, 131, 132 may be configured, adapted, operable, and/or enabled to send information and/or data through the network 110. For example, the talkers 130, 131, 132 may be configured and/or adapted to send a stream of information that includes data, commands, and/or command signals through, using, or across an Ethernet AVB network. Information and/or data sent by the talkers 130, 131, 132 through the network 110, such as through an Ethernet AVB network, may be received by other devices connected with the network 110, such as listeners 140, 141, 132 and/or the controller 150.

The talkers 130, 131, 132 may transmit, send, output, and/or advertise processed information and/or data to the network 110, such as in, with, and/or using a data stream and/or Ethernet AVB signal. For example, the talkers 130, 131, 132 may advertise a data stream encompassing data related to music played by a user on a device (e.g., a MPEG-1 or MPEG-2 Audio Layer III (MP3) player or an electronic musical keyboard) connected with the talkers 130, 131, 132 onto an Ethernet AVB network. The information and/or data advertised by the talkers 130, 131, 132 on the network 110 may be received by other devices, such as by the listeners 140, 141, 142 and/or the controller 150.

The talkers 130, 131, 132 may have one or more talker attributes. A talker attribute may specify, include and/or otherwise identify characteristics about the talkers 130, 131, 132 and/or a data stream advertised by one of the talkers 130, 131, 132. One talker attribute may include multiple pieces of information and/or data. The talker attribute may include, identify, specify, and/or be related to a single piece of information and/or data, and the talkers 130, 131, 132 may have multiple talker attributes. Alternatively, the talker attribute may include, identify, specify, and/or be related to multiple pieces of information and/or data, and the talker may have only a single talker attribute. Various combinations are possible.

The talker attributes may indicate and/or advertise that the talkers 130, 131, 132 may have a data stream, such as an audio, video, and/or command data stream, that the talkers 130, 131, 132 will multicast over the network 110. In addition or alternatively, the talker attributes may indicate how much bandwidth a data stream advertised by a talker 130, 131, 132 may require in order to be transmitted through the network 110. The amount of bandwidth specified may be used by bridges and/or switches in the network 110 to determine if there is enough bandwidth capability to reserve the amount of bandwidth at each switch in the path between a talker 130, 131, 132 and a listener 140, 141, 142. In one example configuration, one or more of the listeners 140, 141, 142 may not be concerned with the amount of bandwidth because one or more of the switches and/or bridges may indicate a failure due to bandwidth constraints before the listener 140, 141, 142 receives bandwidth information specified in the attribute.

In addition or alternatively, a talker attribute may specify a destination address to which to send the data stream. The destination address may identify one or more particular listeners, such as the listener 140, the listener 141, and/or the listener 142. Alternatively, the destination address may be a multicast destination address that allows any listener in the network system 100 (in this case the listeners 140, 141, 142) to receive and/or process the data stream being advertised once the reservation is in place and transmission has begun.

In addition or alternatively, the talker attribute may specify a unique stream identifier ("ID") for a data stream advertised by one of the talkers 130, 131, 132. The stream ID may be a unique sequence of characters and/or numbers which may only be assigned to one stream. In some systems, no two streams may have the same stream ID. The unique stream ID may be a 64 bit stream ID, or various other stream IDs may be used. An assignment and/or identification of the stream ID may be used and/or performed by devices, such as one or more of the listeners 140, 141, 142 to identify a stream for which the device wants to attach itself. For example, one or more of the listeners 140, 141, 142 may receive over the network 110 a message, such as an advertisement, that includes a unique stream ID and may, based on the identification of the stream ID, request attachment, such as connection, to the stream associated with the stream ID. Various other uses of the stream ID are possible. One of the talkers 130, 131, 132 that is associated with the stream ID may be configured to assign the stream ID to the stream at a time during manufacture of the electric devices configured as the talkers 130, 131, 132, such as by a manufacturer, after manufacture, such as at a time that the talker 130, 131, or 132 connects with the network 110, and/or at various other times. Alternatively or in addition, a talker attribute may include a propagation delay from the talker 130, 131, or 132 to one of the listeners 140, 141, 142. The propagation delay may include an "on the wire" delay or latency between one of the talkers 130, 131, 132 and one of the listeners 140, 141, 142. "On the wire" delay may be a time that the data stream takes to be communicated between electronic devices, including the time between being transmitted by one electronic device and being received by another electronic device. The "on the wire" delay may include the time that the data stream takes to be communicated between a talker and a bridge, a listener and a bridge, and/or between bridges. The propagation delay may also include a delay or latency from an ingress port to an egress port of one or more bridges in the network 110.

One or more talker attributes may be stored in the talkers 130, 131, 132, the listeners 140, 141, 142, and/or the controllers 150. For example, a unique stream ID of one of the talkers 130, 131, 132 may be sent to and/or received by the controller 150, which may record and/or store the unique stream ID of the talker 130, 131, or 132 and/or forward the unique stream ID of the talker 130, 131, or 132 to one or more of the listeners 140, 141 142. The talker attributes may or may not be sent through, with, or using a non-SRP protocol. Various other uses and functions of talker attributes are possible.

Before transmitting the data stream, each of the talkers 130, 131, 132 wanting to transmit the data stream may advertise that the talker 130, 131, or 132 wants to transmit the data stream over the network 110 and/or reserve a path over the network 110 between the talker 130, 131 or 132 and one or more of the listeners 140, 141, 142. Alternatively, the talker 130, 131, or 132 may advertise that the data stream is unable to be transmitted to one or more of the listeners 140, 141, 142. To advertise over the network 110, the talker 130, 131, or 132 may transmit a stream advertisement. The stream advertisement may be a signal and/or other transmission from the talker 130, 131, or 132 which may be passed through the network 110. A stream advertisement may indicate that the talker 130 has a data stream that it can, cannot, will, or will not send, multicast, and/or otherwise transmit over the network 110. The stream advertisement may include a Talker Advertisement ("TA") or a Talker Failed ("TF"). The TA may be an advertisement for a stream that has not encountered any bandwidth or other network constraints along the network path from the talker. The TF may be an advertisement for a data stream that is not available to one or more of the listeners 140, 141, 142 because of bandwidth constraints or other limitations somewhere along the path from the talker 130, 131, or 132. In some situations, if a bridge or switch along a path from the talker to listener does not have sufficient bandwidth or resources available, the bridge or switch may change the TA message to a TF message before forwarding it toward one or more of the listeners 140, 141, 142.

The stream advertisement may include details about the data stream, such as one or more talker attributes that may be sent with and/or included in a stream advertisement advertised and/or output by the talker 130, 131, or 132. For example, the stream advertisement may include the stream ID of the data stream being advertised by the talker 130, 131, or 132. The stream advertisement may be transmitted across the network 110 to and/or received by one or more of the listeners 140, 141, 142. In addition, the stream advertisement may include the propagation delay from the talker 130, 131, 132 to one of the listeners 140, 141, 142.

One or more of the listeners 140, 141, 142 may receive the stream advertisement. If one of the listeners 140, 141, or 142 wishes to receive the data stream being advertised by the TA, the listener 140, 141, or 142 may send a response message, such as a Listener Ready ("LR") message, over the network 110 and/or to the talker 130, 131, or 132. The signal may be a request to attach to the data stream via the stream ID, which may be included in the stream advertisement. When a bridge or switch in the AVB network 110 receives the LR from the listener 140, 141, or 142, the bridge may match the LR with the TA and allow the data stream referenced by the stream advertisement to be sent to the requesting listener 140, 141, or 142. One or more listeners 140, 141, 142 may request and/or attach to the same data stream via one stream ID. One of the listeners 140, 141, or 142 may request and/or attach to more than one data stream via the stream IDs of each requested data stream. Other variations are possible.

Each listener 140, 141, 142 may have one or more listener attributes or listener properties. The listener attributes or properties may or may not contain a single piece of information, such as a stream ID that the listener may want to attach to. One or more listener attributes may be sent with, through, and/or using the network 110. One or more listener attributes may be sent to, accessed by, and/or received by one or more receiving devices on the network 110, such the talkers 130, 131, 132 and/or the controller 150. One or more listener attributes may be stored in one or more of the talkers 130, 131, 132, the listeners 140, 141, 142, and/or the controller 150. One or more listener attributes may be used to connect a listener 140, 141, or 142 with a data stream and/or one of the talkers 130, 131, or 132. Various other uses and functions of listener attributes are possible.

The listener attributes or properties may specify, include, and/or otherwise identify characteristics about one or more of the listeners 140, 141, 142. Listener attributes may, for example, exist and/or be used outside of a stream reservation protocol stack within a talker or a listener, and/or may be used to inform devices on the network 110 about the attributes or properties of one or more of the listeners 140, 141, 142. For example, a listener attribute may specify what talkers (e.g., the talker 130, 131, and/or 132) that one or more of the listeners 140, 141, 142 may be interested in. A listener attribute or property may include the stream ID. A listener attribute or property may identify one or more capabilities of one or more of the listeners 140, 141, 142, such as bandwidth that one or more of the listeners 140, 141, 142 has available, a type of data stream that one or more of the listeners 140, 141, 142 may be interested in and/or capable of processing, and/or various capabilities of one or more of the listeners 140, 141, 142. A listener attribute or property may additionally or alternatively specify various other pieces of information and/or data about one or more of the listeners 140, 141, 142. One listener attribute may include multiple pieces of information and/or data. In some systems, each listener attribute or property may be related to only one piece of information and/or data, and each listener 140, 141, 142 may have multiple listener attributes. In other systems, each listener 140, 141, 142 has only one listener attribute or property which specifies multiple pieces of information and/or data about one or more of the listeners 140, 141, 142. The listener attributes or properties may exist and/or be used within or outside of SRP and/or may include some or all of the listener attributes or properties described. Various combinations are possible.

One or more of the listeners 140, 141, 142 may respond to a stream advertisement sent by the talkers 130, 131, 132. The response message may be, for example, a Listener Ready (LR), a Listener Ready Failed (LRF), and/or a Listener Asking Failed (LAF) message. As previously described, the LR message may indicate that one or more of the listeners 140, 141, 142 is requesting attachment to the data stream, and that there is sufficient bandwidth and/or resources along one or more paths to the talker 130, 131, or 132 for all of the listeners 140, 141, 142 to receive the data stream. The LRF message may indicate that more than one of the listeners 140, 141, 142 are requesting attachment to the data stream, and that one of the listeners 140, 141, 142 has sufficient bandwidth and/or resources along the path to receive the data stream, but one or more of the listeners 140, 141, 142 is unable to receive the data stream because of network bandwidth and/or resource allocation problems. The LAF message may indicate that one or more of the listeners 140, 141, 142 are requesting attachment to the data stream, but that none of the listeners 140, 141, 142 are able to receive the data stream because of network bandwidth and/or resource allocation problems. One or more of the listener attributes or listener properties may be included in the LR message, the LRF message, and/or the LAF message. The talker 130, 131, or 132 may receive the response message, and in response to receiving the message, the talker 130, 131, 132 may reserve and/or establish one or more paths with one or more of the listeners 140, 141, 142 and/or send the data stream to the one or more of the listeners 140, 141, 142.

When one of the talkers 130, 131, or 132 determines and/or wants to send the data stream to one or more of the listeners 140, 141, 142, the talker 130, 131, or 132 may be configured to request a reservation for bandwidth for the data stream. The talker 130, 131, 132 may request the reservation by registering information associated with the data stream with the controller 150. In some example configurations, the controller 150 may provide one or more application programming interfaces (APIs) to communicate with the talkers to register the information. To register the information associated with the data stream, the talker 130, 131, or 132 may provide and/or send to the controller 150 the information. The information associated with the data stream may include information that identifies the data stream, that identifies the talker 130, 131, or 132 that wants to transmit the data stream, and/or that identifies one or more listeners 140, 141, 142 to which the talker 130, 131, or 132 wants to send the data stream. The information that identifies the data stream may include the stream ID of the data stream. The information that identifies the talker 130, 131, or 132 may include a source address of the talker 130, 131, or 132. The information that identifies the one or more listeners 140, 141, 142 may include a destination address of the one or more listeners 140, 141, 142.

In addition, the information associated with the data stream may include information that identifies a priority associated with the data stream. The priority may include one or more values, such as predetermined values and/or logical values, or other information that identifies a level or degree of importance, precedence, and/or criticality with respect to other data streams. A data stream with a higher priority may be considered more important, take higher precedence, and/or be more critical that a data stream with a lower priority. Data streams with higher priorities will be given precedence over data streams with lower priorities with regard to bandwidth allocation. For example, if a high-priority data stream wishes to be communicated from one of the talkers 130, 131, 132 to one or more of the listeners 140, 141, 142, but not enough bandwidth is available for the high-priority data stream to be communicated over the network 110, lower-priority data streams consuming at least some of the bandwidth may be dropped and/or terminated in order to make available enough bandwidth for the high-priority data stream to be communicated.

In some example configurations, more than two levels of priorities may be assigned for the various data streams. More than two levels of priorities may provide the controller 150 with a greater ability to control the flow of the data streams and/or ensure that sufficient bandwidth is available for higher-priority data streams, in comparison to data streams that may be assigned one of only two different priorities-emergency and non-emergency-as specified under the SRP.

The priorities associated with a data stream may be based on the content of the data being communicated in the data streams. In addition or alternatively, the priorities may be based on business logic requirements, original equipment (OE) requirements, criticality requirements, industry standards, and/or governmental laws or regulations, as examples. To illustrate, criticality requirements and/or OE requirements may require that data streams that communicate rear-view/vehicle camera signals have a higher priority than data streams that communicate music or movie media content. Additionally, in some example configurations, the priorities may be predetermined by a manufacturer, such as an original equipment manufacturer (OEM).

Also, the information associated with the data stream may include information that identifies one or more capabilities and/or attributes associated with the data stream. The capabilities and/or the attributes associated with the data stream may include one or more bandwidths at which the data stream may be communicated. The capabilities and attributes may also include quality control information, such as resolution, frame-rate, sample size, bit rate, and/or format of the content of the data stream, as examples. Other capabilities and/or attributes may be included. The capabilities and/or attributes may be used to determine, adjust, and/or control the bandwidth consumed by the data stream.

In some example configurations, the talkers 130, 131, 132 may be configured to provide and/or send to the controller 150 multiple bandwidths associated with a data stream, provided multiple bandwidths for the data stream are available. The multiple bandwidths may be alternative bandwidths at which the data stream may be communicated. In some example configurations, the multiple bandwidths may include an optimal bandwidth, a preferred bandwidth, a maximum bandwidth, and/or a minimum bandwidth, as examples. The controller 150 may be configured to use the multiple bandwidths to perform bandwidth allocation and/or dynamically adjust the bandwidths used by the data streams that are being communicated from the talkers 130, 131, 132 to the listeners 140, 141, 142.

In some example configurations, the talkers 130, 131, 132 may be configured to provide the controller 150 with the information associated with the data stream by sending a message with the information over the network 110 to the controller 150. In some examples, the message may be packetized and/or transmitted using packets. The information may be packetized in any packet format and/or in accordance with any standard or protocol, such as Transmission Control Protocol (TCP), User Datagram Protocol (UDP), Audio Video Bridging (AVB) (such as IEEE 802.1AS-2011 (gPTP) for network timing and synchronization, IEEE 802.1Qav-2009 for queuing and forwarding streaming data, IEEE 802.1Qat-2010 ((Stream Reservation Protocol (SRP)) for reserving data stream bandwidth in a network, and/or IEEE 1722-2011 related to a possible data streaming format), or any other standard or protocol under which packets, such as Layer 2 of the Open Systems Interconnection (OSI) model may be formatted.

When the controller 150 receives the information associated with the data stream from the talker 130, 131, 132, the controller 150 may be configured to register and/or communicate the information associated with the SRP. In turn, a stream advertisement, such as a TA, may be transmitted and/or propagated through the system 100 in accordance with the SRP. In response to the stream advertisement being transmitted and/or propagated, the controller 150 may be configured to determine whether the destination address associated with the stream ID is found. That is, the controller 150 may be configured to identify whether one of the listeners 140, 141, 142 configured in the system 100 and/or connected to the network 110 corresponds to and/or has the destination address included in the information provided by the talker 130, 131, or 132. Additionally, in response to the stream advertisement being transmitted and/or propagated, the controller 150 may be configured to identify whether enough bandwidth is available to transmit the data stream to the listener 140, 141, 142. In some example configurations, enough bandwidth is available for the data stream to be communicated if a maximum bandwidth of the data stream is less than or equal to the available bandwidth over the network 110.

If the controller 150 determines that one of the listeners 140, 141, 142 in the system 100 and/or connected to the network 110 corresponds to and/or has the destination address, and also determines that there is enough available bandwidth for the data stream to be transmitted to the listener 140, 141, and/or 142, then the controller 150 may be configured determine that the data stream may be and/or has been reserved in accordance with the SRP. The controller 150 may also be configured to register some or all of the information associated with the data stream provided by the talker 130, 131, or 132 in response to determining that the data stream may be reserved.

The controller 150 may be configured to register the information associated with the data stream by storing the information in memory, such as memory 504 of the computer system 500 described below. In addition or alternatively, the controller 150 may register the information by organizing and/or formatting the information using a table or format.

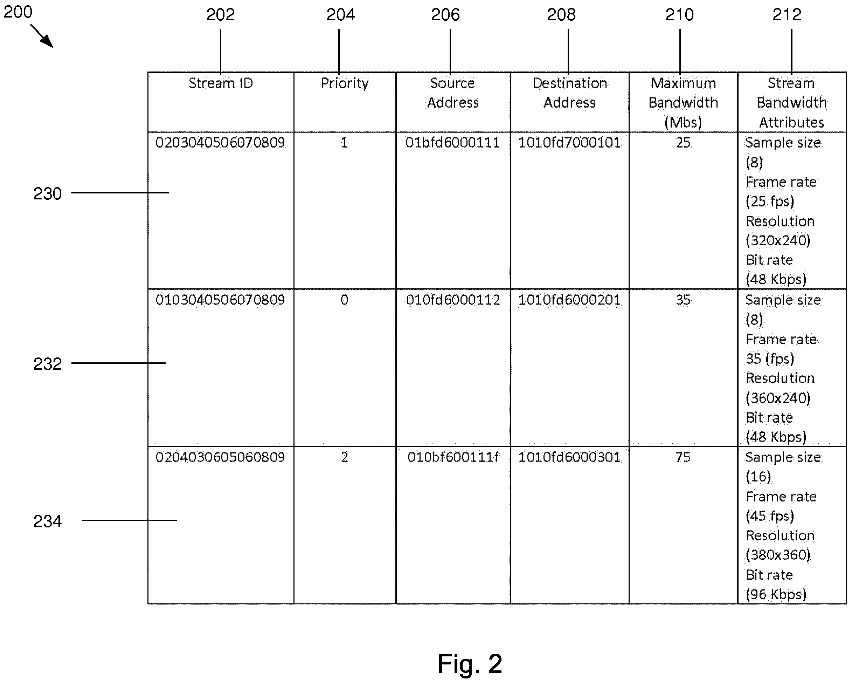

Fig. 2 shows an example table 200 in which the controller 150 may format and/or organize registered information associated with reserved data streams. The table 200 may separate the information associated with the data streams in columns. For example, a first column 202 may include stream IDs of the data streams. A second column 204 may include priorities of the data streams. A third column 206 may include identification information, such as the source address, of the talker 130, 131, or 132 transmitting the data stream. A fourth column 208 may include identification information, such as the destination address, of the listener 140, 141, 142 receiving the data stream. A fifth column 210 may include a maximum bandwidth for the data stream. A sixth column 212 may include the properties and/or attributes associated with the data stream. In alternative table formats, multiple stream attributes may be separated into multiple rows.

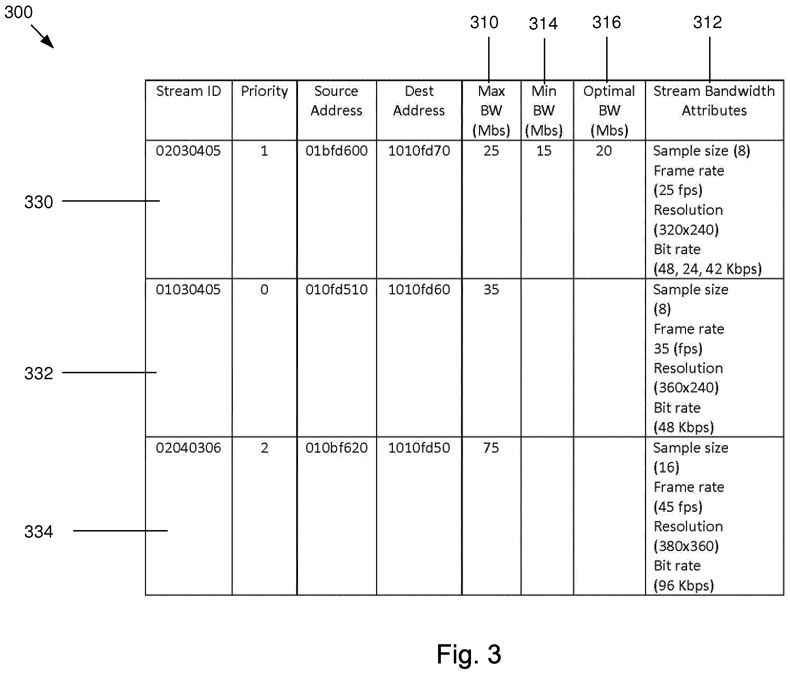

Fig. 3 shows an alternative example table 300 in which the controller 150 may format and/or organize registered information associated with reserved data streams. The table 300 may be similar to the table 200 shown in Fig. 2, except that the table 300 may include multiple columns for multiple bandwidths associated with a data stream. For example, the table 300 includes a first column 310 that includes information identifying a maximum bandwidth, a second column 314 that includes information identifying a minimum bandwidth, and a third column 316 that includes information identifying an optimal bandwidth. Also, a column 312 may include multiple values for one or more of the characteristics or attributes associated with the data streams. For example, as shown in column 312, three values are associated with the bit rate attribute-48, 24 Kbps, 42 Kbs. The multiple values may be used to determine the multiple bandwidths. Also, as shown in the table 300, in some examples, if data streams are not eligible for stream reduction, multiple bandwidth information and/or multiple values for an attribute may not be included.

As previously described, the characteristics and/or properties associated with the data streams may be used by the controller 150 to determine a maximum bandwidth consumed by the data stream. In some example configurations, as described in more detail below, the controller 150 may be configured to determine whether a data stream that is already reserved and/or being transmitted may be transmitted at a lower bandwidth in order to make available bandwidth for one or more additional data streams. The controller 150 may use the multiple values associated the attributes in order to make the determination. If the controller 150 determines a bandwidth lower than the maximum bandwidth, such as a minimum bandwidth, the controller 150 may be configured to modify and/or append the information associated with the data stream in the table 300 to include the lower bandwidth. Alternatively, the various bandwidths associated with the data stream may be predetermined values that are provided by the talker 130, 131, or 132. Whether the lower bandwidths are determined by the controller 150 or are provided to the controller 150 by the talker 130, 131, 132, the controller 150 may use the lower bandwidths to determine whether bandwidth consumed by existing data streams may be reduced in order to make available bandwidth for an incoming data stream.

Additionally, the tables 200 and 300 may be formatted and/or organized to include rows for each of the data streams that have been reserved. For example, referring back to Fig. 2, for the table 200, a first row 230 may include information associated with a first data stream, a second row 232 may include information associated with a second data stream, and a third row 234 may include information associated with a third data stream. Similarly, for the table format 300 shown in Fig. 3, a first row 330 may include information associated with a first data stream, a second row 332 may include information associated with a second data stream, and a third row 334 may include information associated with a third data stream. In one example configuration, the first data stream may be a data stream being communicated from the talker 130 to the listener 140, the second data stream may be a data stream being communicated from the talker 131 to the listener 141, and the third data stream may be a data stream being communicated from the talker 132 to the listener 142. Other configurations are possible.

The controller 150 may be configured to adjust and/or modify, such as by adding or deleting, the registered information. The controller 150 may be configured to change and/or modify the registered information by modifying the information included in the tables 200 and/or 300. When a data stream is reserved in accordance with the SRP, a row with the information associated with the data stream may be added to the tables 200, 300. Similarly, when a data stream is removed and/or torn down, a row with the information associated with the data stream may be deleted. In some example configurations, information associated with a data stream cannot modified without deleting the entire row. For example, if the controller 150 determines that a data stream is to be transmitted at a lower bandwidth, the row including information associated with that data stream may be deleted, and a row that includes information associated with the data stream, including the lower bandwidth information, may be added. In other example configurations, information associated with a data stream may be modified without an entire row being deleted and then added. For example, the controller 150 may change information that is determined to be changed (e.g., an initial bandwidth to a lower bandwidth), while leaving unchanged information that is determined to be unchanged (e.g, the source address). Various configurations are possible.

When a talker 130, 131, or 132 provides to the controller 150 information associated with a new data stream that the talker 130, 131, or 132 wants to send over the network 110, the controller 150 may be configured to determine that there is enough bandwidth in the system 100 for the new data stream to be communicated over the network 110, as previously described. Alternatively, the controller 150 may determine that there is not enough bandwidth for the data stream to be communicated. In one example, the controller 150 may determine that there is not enough bandwidth by comparing the bandwidth required by the new data stream with an amount of bandwidth that is available in the system 100. If the bandwidth required is greater than the amount of bandwidth that is available, then the controller 150 may determine that there is not enough bandwidth for the new data stream to be transmitted over the network 110.

If the controller 150 determines that there is not enough bandwidth for the new data stream to be transmitted over the network 110, then the controller 150 may be configured to determine whether a configuration of existing data streams currently being transmitted may be changed. To make the determination, one or more checks may be performed, including a first check and/or a second check.

The first check may include a check to determine whether reducing the bandwidth consumed by one or more existing data streams may make available bandwidth for the new bandwidth. Initially, the controller 150 may determine if any existing data streams being transmitted over the network 110 are be eligible for bandwidth reduction. An existing data stream may be eligible for bandwidth reduction based on the characteristics and/or attributes associated with the data stream. To illustrate, data rate attributes associated with a data stream containing audio may indicate that the audio stream may be communicated at a first data rate, or alternatively at a lower second data rate. Based on the alternative data rate information, the controller 150 may determine that the audio stream may be eligible for bandwidth reduction because the audio stream may be transmitted over the network 110 at the lower second data rate.

In one example configuration, the controller 150 may be configured to access the information associated with the existing data streams that the controller 150 registered in order to determine the data streams that are eligible for bandwidth reduction. In alternative example configurations, the controller 150 may not be able to determine the eligible data streams based on the registered information. In the alternative configurations, the controller 150 may be configured to send to the talkers 130, 131, and/or 132 that are transmitting existing data streams messages that inquire whether the talkers 130, 131, and/or 132 are eligible for bandwidth reduction. The talkers 130, 131, and/or 132 may be configured to send to the controller 150 reply messages indicating whether or not the talker 130, 131, 132 is eligible for bandwidth reduction, and/or an amount to which the bandwidth may be reduced. The messages may be packetized and/or sent using packets. Also, the packets may be packetized in any packet format and/or in accordance with any standard or protocol, such as TCP, UDP, AVB, or any other standard or protocol under which packets, such as Layer 2 of the Open Systems Interconnection (OSI) model may be formatted.

If the controller 150 determines that one or more existing data streams are eligible for bandwidth reduction, the controller 150 may then determine whether performing the bandwidth reduction (i.e., the lowering the bandwidths of one or more of the eligible existing data streams) will create and/or yield enough available bandwidth for the new data stream to be transmitted over the network. If the controller 150 determines that performing the bandwidth reduction will create enough available bandwidth, then the controller may be configured to perform one or more acts that will result in the one or more eligible data streams being transmitted at reduced bandwidths.

The one or more acts may include determining and/or selecting which of the eligible data streams are to be reduced in bandwidth. Depending on the amount of total bandwidth available in the system 100 and/or the amounts of bandwidths being consumed by the data streams, bandwidth reduction may be performed on all or less than all of the eligible data streams in order to obtain a sufficient amount of bandwidth for the new data stream. To illustrate, suppose that the system 100 has 30 Mbs of total available bandwidth. Additionally, suppose that in an existing configuration, the talker 130 is transmitting a first data stream over the network 110 to the talker 140 using a bandwidth of 20 Mbs, and the talker 131 is transmitting a second data stream over the network 110 to the talker 141 using a bandwidth of 10 Mbs. Further, suppose that each of the first and second data paths are eligible for a bandwidth reduction of 5 Mbs. Additionally, suppose that after paths for the first and second data paths are reserved, the talker 132 requests to the controller 150 that a third data stream be transmitted to the listener 142 using a bandwidth of 10 Mbs. After determining that there is currently not enough bandwidth for transmission of the third data stream, the controller 150 may determine that performing bandwidth reduction on both the first and second data streams will yield enough available bandwidth for transmission of the third data stream over the network 110.

In an alternative illustration, suppose that the talker 132 requests that the third data stream be transmitted using a bandwidth of 5 Mbs. After determining that there is currently not enough bandwidth for transmission of the third data stream, the controller 150 may determine that performing bandwidth reduction on either the first data stream or the data stream will yield enough available bandwidth for transmission of the third data stream over the network 110. Accordingly, the controller 150 may select either the first data stream or the second data stream for bandwidth reduction. In some example configurations, the selection may be based on priority. For example, the data stream having the lowest priority may be selected. In addition or alternatively, the selection may be based on timing. For example, the data stream that was established last in time may be selected. In one example, the selection may be based on time only if the priorities of the streams match. In other example configurations, the selection may be arbitrary.

After the one or more data streams eligible for bandwidth reduction are selected, the controller 150 may be configured to perform bandwidth reduction on the selected data streams. In order to reduce the bandwidth of the selected data streams, the controller 150 may be configured to instruct the talkers 130, 131, and/or 132 and/or the listeners 140, 141, and/or 142 to remove and/or tear down the selected data stream. In one example configuration, the controller 150 may be configured to send control messages to the talkers 130, 131, and/or 132 and/or the listeners 140, 141, and/or 142 that are transmitting and receiving the selected data streams, respectively. In response to receipt of the control messages, the talkers 130, 131, and/or 132 and/or the listeners 140, 141, and/or 142 may remove the reservation for and/or disconnect from the selected data streams in accordance with the SRP.

The system 100 may be configured so that the controller 150 is notified when the selected data streams are removed. When the controller 150 is notified that the selected data streams are removed, the controller 150 may be configured to modify the registered information, such as by updating the table to indicate the selected data streams being torn down. For example, the controller 150 may be configured to delete a row in a table with information that corresponds to the selected data stream that was removed.

Additionally, the controller 150 may be configured to instruct the talkers 130, 131, and/or 132 and/or the listeners 140, 141, and/or 142 to reserve new reservations for the data streams at lower bandwidths. The new reservations for the data streams with lower bandwidths may be made in accordance with the SRP. In some examples, the talkers 130, 131, and/or 132 may transmit a message to the controller 150 with the information associated with the data stream, including information identifying the lower bandwidths. In addition or alternatively, the controller 150 may be notified, such as by using and/or interacting with the SRP, when the new reservations are made. When the controller 150 is notified that the new data streams with the lower bandwidths are removed, the controller 150 may be configured to modify the registered information, such as by updating the table to indicate the new data streams being added. For example, the controller 150 may be configured to add a row in the table with information that corresponds to the new data streams that were added.

The control messages and the response messages communicated between the controller 150 and the talkers 130, 131, and/or 132 and/or to the listeners 140, 141, and/or 142 may be communicated using packets and/or by packetizing the control messages. The packets may be packetized in any packet format and/or in accordance with any standard or protocol, such as TCP, UDP, AVB, or any other standard or protocol under which packets, such as Layer 2 of the Open Systems Interconnection (OSI) model may be formatted.

Each of the talkers 130, 131, and/or 132 and/or the listeners 140, 141, 142 may be configured with one or more buffers that are configured to buffer the data in the data streams. For example, buffers in the talkers 130, 131, and/or 132 may buffer the data before the data is output over the network 110 to the listeners 140, 141, and/or 142. Additionally, the listeners 140, 141, 142 may be configured to buffer data received in the data stream before the data is processed by the listeners 140, 141, 142 and/or other electronic devices in the system 100. The listeners 140, 141, 142 may be configured to buffer a sufficient amount of the data such that data is prevented from being lost and/or dropped when the controller 150 determines to drop the existing data stream and reserve the steam at a lower bandwidth.

As previously described, if the controller 150 determines that there is not enough bandwidth for the new data stream to be transmitted over the network 110, then the controller 150 may be configured to determine whether a configuration of existing data streams currently being transmitted may be changed by performing a second check. The second check may include determining whether the new data stream has a priority over any of the existing data streams. If the new data stream has priority over any of the existing data streams, then the controller 150 may be configured to determine whether bandwidth may be available for transmission of the new higher-priority data stream over the network 110 if connections for one or more of the existing lower-priority data streams are terminated. If bandwidth may be available if the connections for the existing lower-priority data streams are terminated, then one or more of the existing lower-priority data streams may be terminated, and a new reservation is made for the new higher-priority data stream.

To illustrate, suppose that the system 100 has 30 Mbs of available bandwidth for transmission of data streams over the network. Suppose in an existing or current configuration, the talker 130 is transmitting a first data stream over the network 110 to the listener 140 using a bandwidth 15 Mbs. Additionally, suppose the talker 131 is transmitting a second data stream over the network 110 to the listener 141 using a bandwidth of 15Mbs. Also, suppose that the first data stream has a higher priority than the second data stream. Further, suppose that after reservations for the first data stream and the second data stream are made, the talker 132 wants to reserve connection for a third data stream using a bandwidth of 10 Mbs. Further, suppose that the third data stream has a priority that is higher than the second data stream and lower than the first data stream.

When the controller 150 receives the request to make a reservation for the third data stream, the controller 150 may determine that there is currently not enough available bandwidth for transmission of the third data stream over the network 110. After making the determination, the controller 150 may compare the priorities of the first data stream, the second data stream, and the third data stream. Based on the comparison, the controller 150 may determine that the first data stream has a higher priority than the third data stream, which has a higher priority than the second data stream. Additionally, the controller 150 may determine that if the connection of the second data stream is terminated, then enough bandwidth may be available for the third data stream to be transmitted over the network. In turn, the controller 150 may be configured to instruct the talker 131 and/or the listener 141 to remove the reservation for and/or disconnect from the second data stream. The controller 150 may send the instructions using control messages, as previously described. Additionally, the talker 131 and/or the listener 141 may be configured to remove the reservation and/or disconnect from the second data stream in accordance and/or using the SRP. In addition or alternatively, the controller 150 may be configured to be notified when the second data stream is removed and/or torn down. Upon notification, the controller 150 may update the information registered by the controller 150, such as by deleting and/or erasing information associated with the second data stream that was removed.

Additionally, the controller 150 may send instructions to the talker 132 and/or the listener 142 to reserve and/or establish connection for the third data stream. When the third data stream is reserved, the controller 150 may be configured to be notified of the reservation. Upon notification, the controller 150 may be configured to update the information registered by the controller 150, such as by adding information associated with the third data stream.

In some example configurations, if the controller 150 determines that existing lower-priority data streams may be terminated in order for sufficient bandwidth to be available for a higher-priority data stream to be transmitted, and the existing lower-priority data streams have the same level of priority, but not all of the lower-priority data may be dropped for sufficient bandwidth to be available, then the controller 150 may be configured to select the lower-priority stream or streams to terminate based on time. For example, the controller 150 may be configured to terminate the data streams that were reserved and/or established last. Using the illustration above, suppose that the first data stream and the second data stream have the same priority, which is lower than the priority of the third data stream. Additionally, suppose that the first data stream was reserved before the second data stream. If one but not both of the first and second data streams may be terminated for sufficient bandwidth to be available for transmission of the third data stream, then the controller 150 may be configured to terminate the second data stream and maintain the connection for the first data stream.

Additionally, in some example configurations, the controller 150 may be configured to perform the second check if the first check using bandwidth reduction does not yield sufficient bandwidth for the new data stream to be transmitted over the network 110. For example, during the first check, if the controller 150 determines that none of the existing data streams are eligible for bandwidth reduction, and/or determines that bandwidth reduction performed on one or more eligible data streams does not yield sufficient bandwidth for the new data stream to be transmitted, then the controller 150 may be configured to perform the second check and determine whether bandwidth may be made available by terminating one or more existing data streams based on priority.

One or more of the talkers 130, 131, 132, the listeners 140, 141, 142, and/or the controller 150 may be or may include hardware, software, and/or a combination of hardware and software to implement part or all of the functionality of the system. One or more of the talker 130, 131, 132, the listeners 140, 141, 142, and/or the controller 150 may be or may include one or more processors, such as one or more central processing unit (CPU), and/or may be in communication with one or more processors, such as a processor of an integrated circuit (e.g., a field programmable gate array (FPGA) or an application specific integrated circuit (ASIC)). More or fewer components may be included in other examples.

One or more of the talkers 130, 131, 132, the listeners 140, 141, 142, and/or the controller 150 may be connected to each other through or using the network 110. Alternatively or in addition, one or more of the talkers 130, 131, 132, the listeners 140, 141, 142, and/or the controller 150 may be connected to each other directly. For example, one or more of the talkers 130, 131, 132, the listeners 140, 141, 142, and/or the controller 150 may be connected to each other using a wireline such as an Ethernet cable, and/or a wireless network. Various other connections are possible.

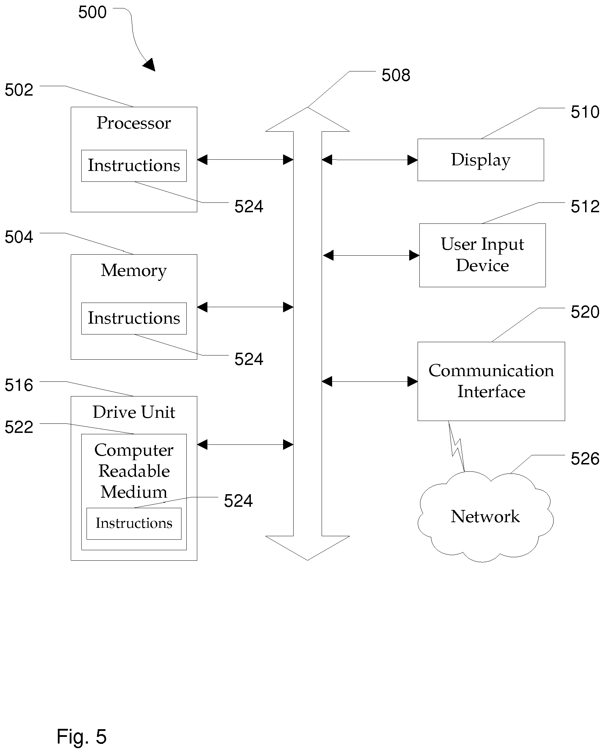

The talkers 130, 131, 132 may or may not be or include a portion or all of the features of a computer system, such as a computer system 500 shown in Fig. 5 and described later. The talkers 130, 131, 132 may be Ethernet AVB enabled and/or compatible. The talkers 130, 131, 132 may be configured, adapted, operable, and/or enabled to communicate through and/or with an Ethernet AVB network using one or more standards or protocols. An example of a protocol associated with communications between the talkers 130, 131, 132 and the network 110 may be the stream reservation protocol specified in IEEE 802.1Qat-2010. Alternatively or additionally, various other protocols, such as IEEE 802.1ak-2007 Multiple MAC Registration Protocol ("MMRP"), IEEE 802.1AS-2011 (gPTP), IEEE 802.1Qav-2009, and/or IEEE 1722-2011 may be used.

The talkers 130, 131, 132 may perform various functions and/or be connected with or include various components. For example, the talkers 130, 131, 132 may be connected with the network 110 and an input device, such as a musical instrument or microphone. Information and/or data may be sent to, received by, and/or otherwise be input to the talkers 130, 131, 132 or a device connected with the talkers 130, 131, 132. For example, a user may play an instrument or sing into a microphone connected with the talkers 130, 131, 132 and information and/or data about the instrument, singing, and/or voice may be received by the talkers 130, 131, 132.

While the talkers 130, 131, 132 in the network communication system 100 may comprise and/or be described as, the physical devices themselves (such as a microphone), it should be appreciated that in some systems, the talkers 130, 131, 132 may be or may include a computer or other electronic controlling device, which may be used and/or operated to control the talkers 130, 131, 132 (such as a microphone). The computer may include some or all of the features of a computer system 500 shown in Fig. 5 and described later. In these systems, the computer or other electronic controller device may be AVB enabled and/or communicate directly with the network 110. In addition, the computer or other electronic controller device may communicate in various ways with the physical device and/or another device, such as with a wired or wireless connection. Various other alternatives are possible.

The talkers 130, 131, 132 may process the information and/or data received in various ways. For example, the talkers 130, 131, 132 may be configured to transform any signal received, such as a musical signal, from an analog signal to a digital signal. In other systems, a computing device may perform processing of received information and/or data, and may send the processed information and/or data to the talkers 130, 131, 132. Various other processing functions may be performed by the talkers 130, 131, 132 and/or devices in communication with the talkers 130, 131, 132.

The listeners 140, 141, 142 may or may not be or include a portion or all of the features of a computer system, such as a computer system 500 shown in Fig. 5 and described later. The listeners 140, 141, 142 may be Ethernet AVB enabled and/or compatible. The listeners 140, 141, 142 may be configured, adapted, operable, and/or enabled to communicate through and/or with an Ethernet AVB network using one or more standards or protocols, such as the stream reservation protocol identified in IEEE 802.1Qat-2010 (SRP), IEEE 802.1Qav-2009, IEEE 802.1AS-2011 (gPTP), and/or IEEE 1722-2011. Alternatively, various other protocols, such as a MMRP, may be used.

The listeners 140, 141, 142 may be configured, adapted, and/or operable to receive information that includes data across, through, and/or using the network. For example the listeners 140, 141, 142 may be configured and/or adapted to receive a data stream passing across the network 110 such as an Ethernet AVB network. The information and/or data received by one or more of the listeners 140, 141, 142 may be, for example, the information and/or data sent by the talkers 130, 131, 132, information and/or data sent by the controller 150, and/or various other information and/or data sent through and/or using the network 110. In some systems, the listeners 140, 141, 142 may register for and/or receive a data stream from the talkers 130, 131, 132. Registration for and/or receipt of a data stream may or may not be received by the listeners 140, 141, 142 with a guaranteed bandwidth. Various other possibilities exist.

The listeners 140, 141, 142 may perform various functions and/or include or be connected with various components. For example, one or more of the listeners 140, 141, 142 may be connected with the network 110, and an output device, such as a speaker or television monitor. Information and/or data may be gathered and/or otherwise received by one or more of the listeners 140, 141, 142 through the network 110. For example, information and/or data about notes played on a musical instrument may be transmitted by the talkers 130, 131, 132 through the network 110 and/or be received by one or more of the listeners 140, 141, 142. The one or more of the listeners 140, 141, 142 may process the information and/or data received through the network 110. In addition, the one or more of the listeners 140, 141, 142 may output processed information and/or data to the speaker. For example, the one or more of the listeners 140, 141, 142 may output information and/or data related to the signal received through the network 110 to the speaker.

While the listeners 140, 141, 142 in the network communication system 100 may comprise and/or be described as physical devices (such as a speaker), it should be appreciated that in some systems, the listeners 140, 141, 142 may be or may include a computer or other electronic controlling device which may be used and/or be operated to control the listeners 140, 141, 142 (such as a speaker). The computer or other electronic controller device may have some or all of the features of a computer system 500 shown in Fig. 5 and described later. In these systems, the computer or other electronic controller device may be AVB enabled and/or communicate directly with the network 110. In these systems, the computer or other electronic controller device may communicate with the physical device and/or a different device in various ways, such as with a standard wired or wireless connection. Various other alternatives are possible.

The controller 150 may or may not be or include a portion or all of the features of a computer system, such as a computer system 500 shown in Fig. 5 and described later. The controller 150 may be Ethernet AVB enabled and/or compatible. The controller 150 may be configured, adapted, operable, and/or enabled to communicate with and/or through an Ethernet AVB network, such as according to, through, and/or with a one or more standards or protocols, such as the stream reservation protocol outlined in IEEE 802.1Qat-2010. Alternatively, various other protocols, such as a MMRP, may be used.

The controller 150 may be or comprise a high-level application of an electronic device that is configured to communicate directly or indirectly with the talkers 130, 131, 132, and/or the listeners 140, 141, 142. The controller 150 may be configured to manage and/or control a connection of a data stream between two or more devices, such as between the one of the talkers 130, 131, 132 and one or more of the listeners 140, 141, 142. The controller 150 may be part of an electronic device or in communication with an electronic device that desires to establish and/or tear down a data stream between two devices. As an example, the controller 150 may be or may be in communication with a remote control. The remote control may be configured to issue a command, such as a "Play" command to the controller 150 which may instruct the controller 150 to establish a connection between one of the talkers 130, 131, 132 and one or more listeners 140, 141, 142.

Fig. 1 shows the controller 150 as an electronic device of the system 100 that is separate from the talkers 130, 131, 132, and the listeners 140, 141, 142. In other example network communication systems, the controller 150 may be a component of one or more of the other electronic devices in the system 100, including the talkers 130, 131, 132 and/or the listeners 140, 141, 142. The component may be one or more high-level applications of the other electronic devices. Where the controller 150 is a component of the other electronic devices, the controllers 150 may be configured to communicate with one or more components of the other electronic devices that are configured to perform the roles of the talkers and/or the listeners. Further, the controller 150 may be configured to communicate with other devices for which the controller 150 are not components over the network 110 and/or through wired or wireless non-network connections. To illustrate, where the controller 150 is a component of the talker 130, the controller 150 may be configured to communicate with one or more components of the talker 130 that are configured to perform the role of the talker. The communications between the controller 150 and the components of the talker 130 that are configured to perform the role of the talker may be performed internal to the talker 130 and/or without communication over the network 110. In addition, the controller 150 may send information and/or messages to the one or more of the listeners 140, 141, 142 over the network 110 or using a wired or wireless non-network connection between the talker 130 and one or more of the listeners 140, 141, 142.

Each of the electronic devices in the example network communications system 100 may include and/or be in communication with memory that may be used to store information and/or data, including latency information and/or information included in the listener latency messages, latency requests, stream latency messages, stream advertisements, replies to stream advertisements, and/or data streams, as examples. The memory may include, but is not limited to, computer readable storage media such as various types of volatile and non-volatile storage media, including but not limited to random access memory, read-only memory, programmable read-only memory, electrically programmable read-only memory, electrically erasable read-only memory, flash memory, magnetic tape or disk, optical media and the like. In one example, the memory may include a cache or random access memory for a processor, such as processor 502 of computer system 500 described later. In alternative examples, the memory is separate from a processor, such as a cache memory of a processor, the system memory, or other memory. The memory may be an external storage device or database for storing data. Examples include a hard drive, compact disc ("CD"), digital video disc ("DVD"), memory card, memory stick, floppy disc, universal serial bus ("USB") memory device, or any other device operative to store data. The memory may be operable to store instructions executable by a processor. The functions, acts or tasks illustrated in the figures or described may be performed by a programmed processor executing the instructions stored in the memory. The functions, acts or tasks are independent of the particular type of instructions set, storage media, processor or processing strategy and may be performed by software, hardware, integrated circuits, firm-ware, micro-code and the like, operating alone or in combination. Likewise, processing strategies may include multiprocessing, multitasking, parallel processing and the like.

In some systems, the memory may be a separate and/or collective memory or database. The separate and/or collective memory or database may represent one database for both the electronic devices in the example network communication system 100, including the talkers 130, 131, 132, the listeners 140, 141, 142, and/or the controller 150. The separate and/or collective memory or database may be continuously updated, or updated at various other intervals. In some systems, the separate and/or collective memory or database may collect and/or update information based on information and/or data about messages and/or data streams received and/or stored in the memory. Updates may be sent by the separate and/or collective memory or database to the memory at various intervals, such as every 10-15 seconds. In these systems, the memory may be the same.

In an alternative example, the memory may not be included in the example network communication system 100, including the talkers 130, 131, 132, the listeners 140, 141, 142, and/or the controller 150. Rather, the memory may be included separately and/or be in communication with the electronic devices in the network communication system 100. In another alternative example systems, parts of a separate and/or collective memory or database may be extracted from an external database and stored in volatile memory in one or more of the electronic devices in the network communication system 100 when one or more of the electronic devices in the network communication system 100 are powered up. Various other examples, functions and/or features of the memory are possible.

The electronic devices of the example network communication system 100, including the talkers 130, 131, 132, the listeners 140, 141, 142, and/or the controller 150 may comprise one or more hardware and/or software based components or modules that are configured to perform the roles of the talker, the listener, and/or the controller. The components or modules may comprise computer instructions, computer code, digital logic, other software, hardware, or any combination thereof a part of which may be stored in the memory and/or any other storage device internal or external to the talkers 130, 131, 132, the listeners 140, 141, 242, and/or the controller 150 and that is executable by one or more processors.

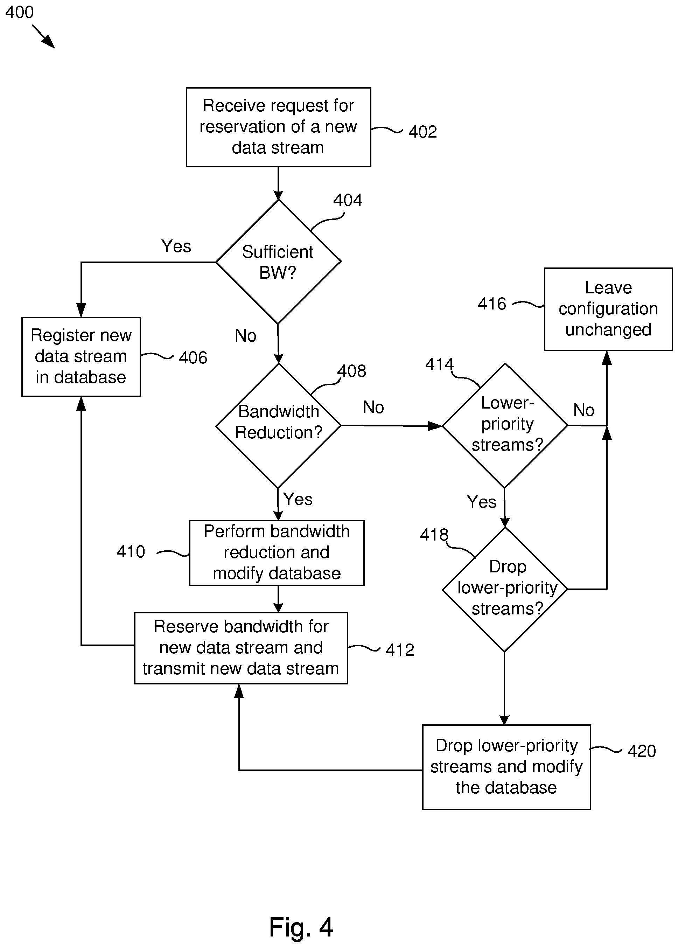

Fig. 4 shows a flow diagram of an example method 400 of determining whether a configuration of data streams being communicated across an AVB network may be modified to provide a sufficient amount of bandwidth for a new data stream to be transmitted. At block 402, a controller receives a request for reservation of a new data stream to be transmitted over the network. At block 404, the controller determines whether sufficient bandwidth is currently available for transmission of the new data stream. The determination may be made based on whether a reservation is made through SRP. In addition or alternatively, the determination may be made based on bandwidth information that the controller registered, as previously described. At block 406, if the controller determines that there is sufficient bandwidth, then the controller may register the new data stream and/or information associated with the new data stream in a database.

Alternatively, if the controller determines that there is not sufficient bandwidth, then at block 408 the controller may determine whether bandwidth reduction may be performed on any existing data streams to create sufficient bandwidth for the new data stream to be transmitted over the network. If the controller determines that bandwidth reduction may be performed on one or more existing data streams to create sufficient bandwidth for the new data stream, then at block 410 the controller may perform bandwidth reduction on one or more data streams that are eligible for bandwidth reduction. As previously described, if bandwidth reduction does not need to be performed on all of the eligible data streams for sufficient bandwidth to be available, then the controller may select the eligible data streams on which to perform the bandwidth reduction based on priority and/or times at which the eligible data streams were registered. Also, at block 410, after selecting the eligible data streams, reservations of the selected data streams may be dropped and/or terminated, and new reservations may be made for the selected data streams at lower bandwidths. At block 412, a reservation for the new data stream is made, and the new data stream may be transmitted over the network. In addition, the method may proceed back to block 406, where the controller may register the new data stream and/or information associated with the new data stream in a database.

Referring back to block 408, if the controller determines there are no eligible data streams for bandwidth reduction and/or that bandwidth reduction on one or more eligible data streams will not yield sufficient bandwidth for the new data stream, then at block 414, the controller may determine whether any existing data streams have a lower priority than the new data stream. If the controller determines that there are not any existing data streams having a lower priority than the priority of the new data stream, then at block 416, then the controller may leave the configuration of data streams unchanged. Additionally, reservation for the new data stream may be queued and/or suspended until existing data streams terminate and sufficient bandwidth becomes available.

Referring back to block 414, if the controller determines that there are existing data streams that have a lower priority than the priority of the new data stream, then at block 418, the controller may determine whether dropping any of the lower priority data streams may yield sufficient bandwidth for the new data stream to be transmitted. If the controller determines that dropping any of the lower priority data streams may not yield sufficient bandwidth for the new data stream, then the method may proceed to block 416, where the controller may determine to leave the configuration of the data streams unchanged. Alternatively, if the controller determines that dropping any of the lower data streams may yield sufficient bandwidth for the new data stream, then at block 420 the controller may determine to drop one or more of the lower-priority data streams in order to free a sufficient amount of bandwidth for the new data stream. After one or more of the lower-priority data streams are dropped, the method may proceed back to block 412, where a reservation for the new data stream is made, and the new data stream may be transmitted over the network. In addition, the method may proceed back to block 406, where the controller may register the new data stream and/or information associated with the new data stream in the database.

One or more of the talkers 130, 131, 132, the listeners 140, 141, 142, and/or the controller 150 may be and/or may include a portion or all of one or more computing devices of various kinds, such as the computing device in Fig. 5. Fig. 5 illustrates an example of a general computer system designated 500. Any of the components from the system 100 may include a portion or all of the computer system 500. For example, in some examples, the computer system 500 may include only a processor and memory. The computer system 500 can include a set of instructions that can be executed to cause the computer system 500 to perform any one or more of the methods or computer based functions disclosed. The computer system 500 may operate as a standalone device or may be connected, e.g., using a network, to other computer systems or peripheral devices.

In a networked deployment, the computer system 500 may operate in the capacity of a server or as a client user computer in a server-client user network environment, or as a peer computer system in a peer-to-peer (or distributed) network environment. The computer system 500 can also be implemented as or incorporated into various devices, such as a personal computer (PC), a tablet PC, a set-top box (STB), a personal digital assistant (PDA), a mobile device, a palmtop computer, a laptop computer, a desktop computer, a communications device, a wireless telephone, a land-line telephone, a control system, a camera, a scanner, a facsimile machine, a printer, a pager, a personal trusted device, a web appliance, a network router, switch or bridge, or any other machine capable of executing a set of instructions (sequential or otherwise) that specify actions to be taken by that machine. In a particular example, the computer system 500 can be implemented using electronic devices that provide voice, audio, video or data communication. Further, while a single computer system 500 is illustrated, the term "system" shall also be taken to include any collection of systems or sub-systems that individually or jointly execute a set, or multiple sets, of instructions to perform one or more computer functions.

In Fig. 5, the example computer system 500 may include a processor 502, e.g., a central processing unit (CPU), a graphics processing unit (GPU), or both. The processor 502 may be a component in a variety of systems. For example, the processor 502 may be part of a standard personal computer or a workstation. The processor 502 may be one or more general processors, digital signal processors, application specific integrated circuits, field programmable gate arrays, servers, networks, digital circuits, analog circuits, combinations thereof, or other now known or later developed devices for analyzing and processing data. The processor 502 may implement a software program, such as code generated manually (i.e., programmed).

The term "module" may be defined to include a plurality of executable modules. As described herein, the modules are defined to include software, hardware or some combination thereof executable by a processor, such as processor 502. Software modules may include instructions stored in memory, such as memory 504, or another memory device, that are executable by the processor 502 or other processor. Hardware modules may include various devices, components, circuits, gates, circuit boards, and the like that are executable, directed, and/or controlled for performance by the processor 502.

The computer system 500 may include a memory 504, such as a memory 504 that can communicate via a bus 508. The memory 504 may be a main memory, a static memory, or a dynamic memory. The memory 504 may include, but is not limited to computer readable storage media such as various types of volatile and non-volatile storage media, including but not limited to random access memory, read-only memory, programmable read-only memory, electrically programmable read-only memory, electrically erasable read-only memory, flash memory, magnetic tape or disk, optical media and the like. In one example, the memory 504 includes a cache or random access memory for the processor 502. In alternative examples, the memory 504 is separate from the processor 502, such as a cache memory of a processor, the system memory, or other memory. The memory 504 may be an external storage device or database for storing data. Examples include a hard drive, compact disc ("CD"), digital video disc ("DVD"), memory card, memory stick, floppy disc, universal serial bus ("USB") memory device, or any other device operative to store data. The memory 504 is operable to store instructions executable by the processor 502. The functions, acts or tasks illustrated in the figures or described may be performed by the programmed processor 502 executing the instructions stored in the memory 504. The functions, acts or tasks are independent of the particular type of instructions set, storage media, processor or processing strategy and may be performed by software, hardware, integrated circuits, firm-ware, micro-code and the like, operating alone or in combination. Likewise, processing strategies may include multiprocessing, multitasking, parallel processing and the like.

As shown, the computer system 500 may or may not further include a display unit 510, such as a liquid crystal display (LCD), an organic light emitting diode (OLED), a flat panel display, a solid state display, a cathode ray tube (CRT), a projector, a printer or other now known or later developed display device for outputting determined information. The display 510 may act as an interface for the user to see the functioning of the processor 502, or specifically as an interface with the software stored in the memory 504 or in the drive unit 516.

Additionally, the computer system 500 may include an input device 512 configured to allow a user to interact with any of the components of system 500. The input device 512 may be a number pad, a keyboard, or a cursor control device, such as a mouse, or a joystick, touch screen display, remote control or any other device operative to interact with the computer system 500.

In a particular example, as depicted in Figure 5, the computer system 500 may also include a disk or optical drive unit 516. The disk drive unit 516 may include a computer-readable medium 522 in which one or more sets of instructions 524, e.g. software, can be embedded. Further, the instructions 524 may embody one or more of the methods or logic as described. In a particular example, the instructions 524 may reside completely, or at least partially, within the memory 504 and/or within the processor 502 during execution by the computer system 500. The memory 504 and the processor 502 also may include computer-readable media as discussed above.

The present disclosure contemplates a computer-readable medium that includes instructions 524 or receives and executes instructions 524 responsive to a propagated signal so that a device connected to a network 526 can communicate voice, video, audio, images or any other data over the network 526. Further, the instructions 524 may be transmitted or received over the network 526 via a communication port or interface 520, and/or using a bus 508. The communication port or interface 520 may be a part of the processor 502 or may be a separate component. The communication port 520 may be created in software or may be a physical connection in hardware. The communication port 520 may be configured to connect with a network 526, external media, the display 510, or any other components in system 500, or combinations thereof. The connection with the network 526 may be a physical connection, such as a wired Ethernet connection or may be established wirelessly as discussed later. Likewise, the additional connections with other components of the system 500 may be physical connections or may be established wirelessly. The network 526 may alternatively be directly connected to the bus 508.

The network 526 may include wired networks, wireless networks, Ethernet AVB networks, or combinations thereof. The wireless network may be a cellular telephone network, an 802.11, 802.16, 802.20, 802.1Q or WiMax network. Further, the network 526 may be a public network, such as the Internet, a private network, such as an intranet, or combinations thereof, and may utilize a variety of networking protocols now available or later developed including, but not limited to TCP/IP based networking protocols.

While the computer-readable medium is shown to be a single medium, the term "computer-readable medium" may include a single medium or multiple media, such as a centralized or distributed database, and/or associated caches and servers that store one or more sets of instructions. The term "computer-readable medium" may also include any medium that is capable of storing, encoding or carrying a set of instructions for execution by a processor or that cause a computer system to perform any one or more of the methods or operations disclosed. The "computer-readable medium" may be non-transitory, and may be tangible.

In an example, the computer-readable medium can include a solid-state memory such as a memory card or other package that houses one or more non-volatile read-only memories. Further, the computer-readable medium can be a random access memory or other volatile re-writable memory. Additionally, the computer-readable medium can include a magneto-optical or optical medium, such as a disk or tapes or other storage device to capture carrier wave signals such as a signal communicated over a transmission medium. A digital file attachment to an e-mail or other self-contained information archive or set of archives may be considered a distribution medium that is a tangible storage medium. Accordingly, the disclosure is considered to include any one or more of a computer-readable medium or a distribution medium and other equivalents and successor media, in which data or instructions may be stored.

In an alternative example, dedicated hardware implementations, such as application specific integrated circuits, programmable logic arrays and other hardware devices, can be constructed to implement various modules or parts of modules included in the system. Applications that may include the apparatus and systems can broadly include a variety of electronic and computer systems. One or more examples described may implement functions using two or more specific interconnected hardware modules or devices with related control and data signals that can be communicated between and through the modules, or as portions of an application-specific integrated circuit. Accordingly, the present system encompasses software, firmware, and hardware implementations.

The system described may be implemented by software programs executable by a computer system. Further, in a non-limited example, implementations can include distributed processing, component/object distributed processing, and parallel processing. Alternatively, virtual computer system processing, such as cloud computing, can be constructed to implement various parts of the system.

The system is not limited to operation with any particular standards and protocols. For example, standards for Internet and other packet switched network transmission (e.g., TCP/IP, UDP/IP, HTML, HTTP) may be used. Such standards are periodically superseded by faster or more efficient equivalents having essentially the same functions. Accordingly, replacement standards and protocols having the same or similar functions as those disclosed are considered equivalents thereof.

While various embodiments of the invention have been described, it will be apparent to those of ordinary skill in the art that many more embodiments and implementations are possible within the scope of the attached claims.

## Claims

1. A method of managing streams when a talker (130, 131, 132) requests reservation of bandwidth for a new data stream to be transmitted over a network (110), the method comprising:
receiving, with a controller (150), information associated with the new data stream; determining (404), with the controller (150), that a sufficient bandwidth is not available for transmission of the new data stream over the network (110);
in response to determining that the sufficient bandwidth is not available, performing, with the controller (150), a first check, where performing the first check comprises:
determining (408), with the controller (150), whether reducing bandwidth consumed by one or more existing data streams transmitted over the network (110) yields the sufficient bandwidth for the new data stream to be transmitted over the network (110), by registering, with the controller (150), information associated with the one or more existing data streams, and identifying, with the controller (150), one or more eligible data streams of the one or more existing data streams that are eligible for bandwidth reduction, where identifying the one or more eligible data streams comprises identifying the one or more eligible data streams based on the registered information associated with the one or more existing data streams; and
in response to determining that bandwidth reduction on one or more eligible data streams will not yield sufficient bandwidth for the new data stream, then performing, with the controller (150), a second check, where performing the second check comprises: identifying (414), with the controller (150), whether one or more of the existing data streams has a lower priority than a priority of the new data stream; and
in response to identifying that the one or more of the existing data streams has the lower priority, determining (418), with the controller (150), whether terminating the one or more existing data streams having the lower priority yields the sufficient bandwidth for the new data stream to be transmitted over the network (110).

2. The method of claim 1, where performing the second check comprises performing the second check if the first check yields insufficient bandwidth for the new data stream to be transmitted over the network (110).

3. The method of claims 1 or 2, where determining whether reducing bandwidth consumed by the one or more existing data streams yields the sufficient bandwidth comprises:
determining, with the controller (150), that reducing the bandwidth consumed by the one or more eligible data streams yields the sufficient bandwidth; and
performing, with the controller (150), bandwidth reduction on at least one of the one or more eligible data streams to make available the sufficient bandwidth for the new data stream to be transmitted over the network (110).

4. The method of any of the claims 1 to 3, where the information associated with the one or more existing data streams is registered to a table (200) in memory, the table (200) including a plurality of rows (230, 232, 234) and columns (202, 204, 206, 208, 210,212).

5. The method of any of claims 1 to 4, where the information associated with the one or more existing data streams comprises one or more bandwidths and at least one attribute used to determine the one or more bandwidths.

6. The method according to any of claims 3 to 5, further comprising:
selecting, with the controller (150), less than all of the one or more eligible data streams on which to perform bandwidth reduction.

7. The method of claim 6, where selecting less than all of the eligible data streams is based on at least one of priority or time.

8. The method according to any of claims 3 to 7, where performing bandwidth reduction on at least one of the one or more eligible data streams comprises:
instructing, with the controller (150), one or more talkers (130, 131, 132) to transmit the at least one of the one or more eligible data streams using a lower bandwidth.

9. The method according to any of claims 1 to 8, further comprising:
determining, with the controller (150), that terminating at least one of the one or more lower-priority data streams yields the sufficient bandwidth; and
instructing, with the controller (150), one or more talkers (130, 131, 132) to terminate the at least one of the one or more lower-priority data streams.

10. The method of claim 9, further comprising:
registering, with the controller (150), information associated with the one or more existing data streams,
where identifying whether the one or more existing data streams has a lower priority than the priority of the new data stream is based on the registered information associated with the one or more existing data streams.

11. The method of claim 10, where the information associated with the one or more existing data streams comprises one or more priority levels of the one or more existing data streams.

12. A controller (150) configured to manage data streams in a network communication system, the controller (150) comprising:
a memory; and
a processor in communication with the memory, the processor configured to:
determine (404) that a sufficient amount of bandwidth is not available for a talker (130, 131, 132) to transmit a new data stream over a network (110);
modify a current configuration of existing data streams being communicated over the network (110) to make available the sufficient amount of bandwidth over the network (110) by:
in response to determining that the sufficient bandwidth is not available, performing a first check, where performing the first check comprises that the processor is configured to:
determine (408), whether reducing bandwidth consumed by one or more existing data streams transmitted over the network (110) yields the sufficient bandwidth for the new data stream to be transmitted over the network (110), by registering information associated with the one or more existing data streams, and identifying one or more eligible data streams of the one or more existing data streams that are eligible for bandwidth reduction, where identifying the one or more eligible data streams comprises identifying the one or more eligible data streams based on the registered information associated with the one or more existing data streams; and
in response to determining that bandwidth reduction on one or more eligible data streams will not yield sufficient bandwidth for the new data stream, then perform a second check, where performing the second check comprises processor means to:
identify (414) whether one or more of the existing data streams has a lower priority than a priority of the new data stream; and
in response to identifying that the one or more of the existing data streams has the lower priority, determine (418) whether terminating the one or more existing data streams having the lower priority yields the sufficient bandwidth for the new data stream to be transmitted over the network (110) .

13. The controller (150) of claim 12, where the processor is configured to perform a reduction in bandwidth on the at least one of the existing data streams by instructing one or more talkers (130, 131, 132) to transmit the at least one of the existing data streams using a lower bandwidth.

14. The controller (150) of claims 12 or 13, where the information associated with the existing data streams is registered to a table (200) in the memory, the table (200) including a plurality of rows (230, 232, 234) and columns (202, 204, 206, 208, 210,212).

15. The controller (150) of claim 12, where the processor is further configured to:
register information associated with the existing data streams;
identify one or more lower-priority data streams of the existing data streams having the lower priority, the identification being based on the registered information; and
terminate at least one of the one or more lower-priority data streams based on at least one of the identified one or more lower-priority data streams.

## Patentansprüche

1. Verfahren zum Verwalten von Strömen, wenn ein Sprecher (130, 131, 132) Reservierung einer Brandbreite für einen neuen Datenstrom beantragt, der über ein Netzwerk (110) zu übertragen ist, das Verfahren umfassend:
Empfangen, mit einer Steuerung (150), von Informationen, die mit dem neuen Datenstrom assoziiert sind;
Bestimmen (404), mit der Steuerung (150), dass keine ausreichende Bandbreite zur Übertragung des neuen Datenstroms über das Netzwerk (110) verfügbar ist;
als Reaktion auf das Bestimmen, dass die ausreichende Bandbreite nicht verfügbar ist, Durchführen einer ersten Prüfung mit der Steuerung (150), wobei das Durchführen der ersten Prüfung Folgendes umfasst:
Bestimmen (408), mit der Steuerung (150), ob Reduzieren der Bandbreite, die von einem oder mehreren bestehenden Datenströmen, die über das Netzwerk (110) übertragen werden, verbraucht wird, die ausreichende Bandbreite bereitstellt, um den neuen Datenstrom, über das Netzwerk (110) zu übertragen, durch Registrieren, mit der Steuerung (150), von Informationen, die mit dem einen oder den mehreren bestehenden Datenströmen assoziiert sind, und Identifizieren, mit der Steuerung (150), von einem oder mehreren auswählbaren Datenströmen aus dem einen oder den mehreren bestehenden Datenströmen, die für die Reduktion der Bandbreite auswählbar ist/sind, wobei das Identifizieren des einen oder der mehreren auswählbaren Datenströme das Identifizieren des einen oder der mehreren auswählbaren Datenströme aufgrund der registrierten Informationen, die mit dem einen oder den mehreren bestehenden Datenströmen assoziiert sind, umfasst; und
als Reaktion auf das Bestimmen, dass das Reduzieren der Bandbreite bei einem oder mehreren auswählbaren Datenströmen keine ausreichende Bandbreite für den neuen Datenstrom bereitstellt, dann das Durchführen, mit der Steuerung (150), einer zweiten Prüfung, wobei das Durchführen der zweiten Prüfung Folgendes umfasst:
Identifizieren (414), mit der Steuerung (150), ob einer oder mehrere der bestehenden Datenströme über eine niedrigere Priorität verfügt als eine Priorität des neuen Datenstroms; und
als Reaktion auf das Identifizieren, dass der eine oder mehrere der bestehenden Datenströme über die niedrigere Priorität verfügt,
Bestimmen (418), mit der Steuerung (150), ob ein Abbrechen des einen oder der mehreren bestehenden Datenströme, welche über die niedrigere Priorität verfügen, die ausreichende Bandbreite bereitstellt, um den neuen Datenstrom über das Netzwerk (110) zu übertragen.

2. Verfahren nach Anspruch 1, wobei das Durchführen der zweiten Prüfung das Durchführen der zweiten Prüfung umfasst, wenn die erste Prüfung nicht ausreichende Bandbreite bereitstellt, um den neuen Datenstrom über das Netzwerk (110) zu übertragen.

3. Verfahren nach Anspruch 1 oder 2, wobei das Bestimmen, ob das Reduzieren der Bandbreite, die von dem einen oder mehreren bestehenden Datenströmen verbraucht wird, die ausreichende Bandbreite bereitstellt, Folgendes umfasst:
Bestimmen, mit der Steuerung (150), dass das Reduzieren der Bandbreite, die von dem einen oder mehreren bestehenden Datenströmen verbraucht wird, die ausreichende Bandbreite bereitstellt; und
Durchführen, mit der Steuerung (150), einer Bandbreitenreduktion bei mindestens einem des einen oder der mehreren auswählbaren Datenströme, um die ausreichende Bandbreite bereitzustellen, um den neuen Datenstrom über das Netzwerk (110) zu übertragen.

4. Verfahren nach einem der Ansprüche 1 bis 3, wobei die Informationen, die mit dem einen oder mehreren bestehenden Datenströmen assoziiert sind, im Speicher in eine Tabelle (200) registriert sind, wobei die Tabelle (200) eine Vielzahl von Reihen (230, 232, 234) und Spalten (202, 204, 206, 208, 210, 212) umfasst.

5. Verfahren nach einem der Ansprüche 1 bis 4, wobei die Informationen, die mit dem einen oder mehreren bestehenden Datenströmen assoziiert sind, eine oder mehrere Bandbreiten und mindestens ein Attribut, das zum Bestimmen der einen oder der mehreren Bandbreiten genutzt wird, umfassen.

6. Verfahren nach einem der Ansprüche 3 bis 5, ferner umfassend:
Auswählen, mit der Steuerung (150), von weniger als allen des einen oder der mehreren auswählbaren Datenströme, bei welchen die Bandbreitenreduktion durchzuführen ist.

7. Verfahren nach Anspruch 6, wobei das Auswählen von weniger als allen der auswählbaren Datenströme auf zumindest einer Priorität oder einer Zeit basiert.

8. Verfahren nach einem der Ansprüche 3 bis 7, wobei das Durchführen der Bandbreitenreduktion bei mindestens einem des einen oder der mehreren auswählbaren Datenströme umfasst:
einen oder mehrere Sprecher (130, 131, 132) mit der Steuerung (150) anweisen, den mindestens einen des einen oder der mehreren auswählbaren Datenströme bei einer niedrigeren Bandbreite zu übertragen.

9. Verfahren nach einem der Ansprüche 1 bis 8, ferner umfassend:
Bestimmen, mit der Steuerung (150), dass das Abbrechen von mindestens einem des einen oder der mehreren Datenströme mit niedrigerer Priorität die ausreichende Bandbreite bereitstellt; und
an einen oder mehrere Sprecher (130, 131, 132) mit der Steuerung (150) anweisen, den mindestens einen des einen oder der mehreren Datenströme mit niedrigerer Priorität abzubrechen.

10. Verfahren nach Anspruch 9, ferner umfassend:
Registrieren, mit der Steuerung (150), von Informationen, die mit dem einen oder den mehreren bestehenden Datenströmen assoziiert sind,
wobei das Identifizieren, ob der eine oder mehrere bestehende Datenströme über eine niedrigere Priorität verfügt/verfügen als die Priorität des neuen Datenstroms, auf den registrierten Informationen basiert, die mit dem einen oder den mehreren bestehenden Datenströmen assoziiert sind.

11. Verfahren nach Anspruch 10, wobei die Informationen, die mit dem einen oder den mehreren bestehenden Datenströmen assoziiert sind, ein oder mehrere Prioritätsniveaus des einen oder der mehreren bestehenden Datenströme umfasst.

12. Steuerung (150), die dazu konfiguriert ist, Datenströme in einem Netzwerkkommunikationssystem zu verwalten, wobei die Steuerung (150) Folgendes umfasst:
einen Speicher; und
einen Prozessor in Kommunikation mit dem Speicher, wobei der Prozessor zu Folgendem konfiguriert ist:
Bestimmen (404), dass eine ausreichende Menge an Bandbreite nicht zur Verfügung steht, damit ein Sprecher (130, 131, 132) einen neuen Datenstrom über das Netzwerk (110) übertragen kann;
Modifizieren einer gegenwärtigen Konfiguration von bestehenden Datenströmen, die über das Netzwerk (110) kommuniziert werden, um eine ausreichende Bandbreite über das Netzwerk (110) bereitzustellen, indem:
als Reaktion auf das Bestimmen, dass die ausreichende Bandbreite nicht zur Verfügung steht, Durchführen einer ersten Prüfung, wobei das Durchführen der ersten Prüfung umfasst, dass der Prozessor zu Folgendem konfiguriert ist:
Bestimmen (408), ob das Reduzieren der Bandbreite, die von einem oder mehreren bestehenden Datenströmen, die über das Netzwerk (110) übertragen werden, verbraucht wird, ausreichende Bandbreite bereitstellt, um den neuen Datenstrom über das Netzwerk (110) zu übertragen, durch Registrieren von Informationen, die mit dem einen oder den mehreren bestehenden Datenströmen assoziiert sind, und Identifizieren von einem oder mehreren auswählbaren Datenströmen aus dem einen oder den mehreren bestehenden Datenströmen, die zur Bandbreitenreduktion auswählbar sind, wobei das Identifizieren des einen oder der mehreren der auswählbaren Datenströme das Identifizieren des einen oder der mehreren auswählbaren Datenströme, basierend auf den registrierten Informationen, die mit dem einen oder den mehreren bestehenden Datenströmen assoziiert sind, umfasst; und
als Reaktion auf das Bestimmen, dass die Bandbreitenreduktion bei einem oder mehreren auswählbaren Datenströmen nicht ausreichende Bandbreite für den neuen Datenstrom bereitstellen wird, dann das Durchführen einer zweiten Prüfung, wobei das Durchführen der zweiten Prüfung Prozessormittel umfasst:
zum Identifizieren (414), ob einer oder mehrere der bestehenden Datenströme über eine niedrigere Priorität verfügen als eine Priorität des neuen Datenstroms; und
als Reaktion auf das Identifizieren, dass der eine oder mehrere der bestehenden Datenströme über die niedrigere Priorität verfügen,
zum Bestimmen (418), ob das Abbrechen des einen oder der mehreren bestehenden Datenströme, die über die niedrigere Priorität verfügen, die ausreichende Bandbreite bereitstellt, um den neuen Datenstrom über das Netzwerk (110) zu übertragen.

13. Die Steuerung (150) nach Anspruch 12, wobei der Prozessor dazu konfiguriert ist, eine Reduktion der Bandbreite bei mindestens einem der bestehenden Datenströme durchzuführen, indem ein oder mehrere Sprecher (130, 131, 132) angewiesen wird/werden, den mindestens einen der bestehenden Datenströme bei einer niedrigeren Bandbreite zu übertragen.

14. Die Steuerung (150) nach Anspruch 12 oder 13, wobei die Informationen, die mit den vorhandenen Datenströmen assoziiert sind, in einer Tabelle (200) im Speicher registriert sind, wobei die Tabelle (200) eine Vielzahl von Reihen (230, 232, 234) und Spalten (202, 204, 206, 208, 210, 212) umfasst.

15. Die Steuerung (150) nach Anspruch 12, wobei der Prozessor ferner zu Folgendem konfiguriert ist:
Registrieren von Informationen, die mit den bestehenden Datenströmen assoziiert sind;
Identifizieren von einem oder mehreren Datenströmen mit niedrigerer Priorität aus den bestehenden Datenströmen, welche über die niedrigere Priorität verfügen, wobei das Identifizieren auf den registrierten Informationen basiert; und
Abbrechen von mindestens einem des einen oder der mehreren der Datenströme mit niedrigerer Priorität, basierend auf mindestens einem des identifizierten Datenstroms oder der identifizierten Datenströme mit niedrigerer Priorität.

## Revendications

1. Procédé de gestion de flux lorsqu'un correspondant (130, 131, 132) demande la réservation d'une largeur de bande pour un nouveau flux de données à transmettre sur un réseau (110), le procédé comprenant :
la réception, avec un contrôleur (150), d'informations associées au nouveau flux de données ;
la détermination (404), avec le contrôleur (150), qu'une largeur de bande suffisante n'est pas disponible pour la transmission du nouveau flux de données sur le réseau (110) ;
la mise en oeuvre, avec le contrôleur (150), d'une première vérification, en réponse à la détermination que la largeur de bande suffisante n'est pas disponible, dans lequel la mise en oeuvre de la première vérification comprend :
la détermination (408), avec le contrôleur (150), de l'opportunité que la réduction de la largeur de bande consommée par un ou plusieurs flux de données existants transmis sur le réseau (110) produise la largeur de bande suffisante pour le nouveau flux de données à transmettre sur le réseau (110), par l'enregistrement, avec le contrôleur (150), d'informations associées à l'au moins un flux de données existant, et l'identification, avec le contrôleur (150), d'un ou plusieurs flux de données éligibles de l'au moins un flux de données existant qui sont éligibles à la réduction de la largeur de bande, dans lequel l'identification de l'au moins un flux de données éligibles comprend l'identification de l'au moins un flux de données éligibles sur la base des informations enregistrées associées à l'au moins un flux de données existant ; et
la mise en oeuvre par la suite, avec le contrôleur (150), d'une seconde vérification, en réponse à la détermination que la réduction de la largeur de bande d'un ou plusieurs flux de données éligibles ne produira pas de largeur de bande suffisante pour le nouveau flux de données, dans lequel la mise en oeuvre de la seconde vérification comprend :
l'identification (414), avec le contrôleur (150), de l'opportunité qu'un ou plusieurs des flux de données existants présentent une priorité inférieure à une priorité du nouveau flux de données ; et
en réponse à l'identification que les un ou plusieurs flux de données existants présentent la priorité la plus faible.
la détermination (418), avec le contrôleur (150), de l'opportunité que la terminaison des un ou plusieurs flux de données existants ayant la priorité la plus faible produise la largeur de bande suffisante pour le nouveau flux de données à transmettre sur le réseau (110).

2. Procédé selon la revendication 1, dans lequel la mise en oeuvre de la seconde vérification comprend la mise en oeuvre de la seconde vérification si la première vérification produit une largeur de bande insuffisante pour le nouveau flux de données à transmettre sur le réseau (110).

3. Procédé selon les revendications 1 ou 2, dans lequel la détermination de l'opportunité que la réduction de la largeur de bande consommée par les un ou plusieurs flux de données existants produise la largeur de bande suffisante comprend :
la détermination, avec le contrôleur (150), que la réduction de la largeur de bande consommée par les un ou plusieurs flux de données éligibles produit la largeur de bande suffisante ; et
la mise en oeuvre, avec le contrôleur (150), de la réduction de la largeur de bande sur au moins un des un ou plusieurs flux de données éligibles pour rendre disponible la largeur de bande suffisante pour le nouveau flux de données à transmettre sur le réseau (110).

4. Procédé selon l'une quelconque des revendications 1 à 3, dans lequel les informations associées aux un ou plusieurs flux de données existants sont enregistrées sur une table (200) dans une mémoire, la table (200) incluant une pluralité de rangées (230, 232, 234) et de colonnes (202, 204, 206, 208, 210, 212) .

5. Procédé selon l'une quelconque des revendications 1 à 4, dans lequel les informations associées aux un ou plusieurs flux de données existants comprennent une ou plusieurs largeurs de bandes et au moins un attribut utilisé pour déterminer les une ou plusieurs largeurs de bandes.

6. Procédé selon l'une quelconque des revendications 3 à 5, comprenant en outre :
la sélection, avec le contrôleur (150), de moins de l'ensemble des un ou plusieurs flux de données éligibles sur lesquels mettre en oeuvre la réduction de la largeur de bande.

7. Procédé selon la revendication 6, dans lequel la sélection de moins de l'ensemble des flux de données éligibles est basée sur une priorité et/ou une durée.

8. Procédé selon l'une quelconque des revendications 3 à 7, dans lequel la mise en oeuvre de la réduction de la largeur de bande sur au moins un des un ou plusieurs flux de données éligibles comprend :
l'envoi, avec le contrôleur (150), d'une instruction à un ou plusieurs correspondants (130, 131, 132) de transmettre l'au moins un flux parmi les un ou plusieurs flux de données éligibles à l'aide de la largeur de bande la plus faible.

9. Procédé selon l'une quelconque des revendications 1 à 8, comprenant en outre :
la détermination, avec le contrôleur (150), que la terminaison d'au moins un des un ou plusieurs flux de données ayant la priorité la plus faible produit la largeur de bande suffisante ; et
l'envoi, avec le contrôleur (150), d'une instruction à un ou plusieurs correspondants (130, 131, 132) de terminer l'au moins un flux parmi les un ou plusieurs flux de données ayant la priorité la plus faible.

10. Procédé selon la revendication 9, comprenant en outre :
l'enregistrement, avec le contrôleur (150), d'informations associées aux un ou plusieurs flux de données existants,
dans lequel l'identification de l'opportunité que les un ou plusieurs flux de données existants aient une priorité inférieure à la priorité du nouveau flux de données est basée sur les informations enregistrées associées aux un ou plusieurs flux de données existants.

11. Procédé selon la revendication 10, dans lequel les informations associées aux un ou plusieurs flux de données existants comprennent un ou plusieurs niveaux de priorité des un ou plusieurs flux de données existants.

12. Contrôleur (150) configuré pour gérer des flux de données dans un système de communication de réseau, le contrôleur (150) comprenant :
une mémoire ; et
un processeur en communication avec la mémoire, le processeur étant configuré pour :
déterminer (404) qu'une quantité suffisante de largeur de bande n'est pas disponible pour qu'un correspondant (130, 131, 132) puisse transmettre un nouveau flux de données sur un réseau (110) ;
modifier une configuration actuelle de flux de données existants mis en communication sur le réseau (110) pour rendre disponible la quantité suffisante de largeur de bande sur le réseau (110) par :
la mise en oeuvre d'une première vérification, en réponse à la détermination que la largeur de bande suffisante n'est pas disponible, dans lequel la mise en oeuvre de la première vérification comprend le fait que le processeur est configuré pour :
déterminer (408) l'opportunité que la réduction de la largeur de bande consommée par un ou plusieurs flux de données existants transmis sur le réseau (110) produise la largeur de bande suffisante pour le nouveau flux de données à transmettre sur le réseau (110), par l'enregistrement d'informations associées aux un ou plusieurs flux de données existants, et l'identification d'un ou plusieurs flux de données éligibles des un ou plusieurs flux de données existants qui sont éligibles à la réduction de la largeur de bande, dans lequel l'identification des un ou plusieurs flux de données éligibles comprend l'identification des un ou plusieurs flux de données éligibles sur la base des informations enregistrées associées aux un ou plusieurs flux de données existants ; et
mettre en oeuvre par la suite une seconde vérification, en réponse à la détermination que la réduction de la largeur de bande d'un ou plusieurs flux de données éligibles ne produira pas de largeur de bande suffisante pour le nouveau flux de données, dans lequel la mise en oeuvre de la seconde vérification comprend des moyens de traitement pour :
identifier (414) l'opportunité qu'un ou plusieurs des flux de données existants présentent une priorité inférieure à une priorité du nouveau flux de données ; et
en réponse à l'identification que les un ou plusieurs flux de données existants présentent la priorité la plus faible.
déterminer (418) l'opportunité que la terminaison des un ou plusieurs flux de données existants ayant la priorité la plus faible produise la largeur de bande suffisante pour le nouveau flux de données à transmettre sur le réseau (110).

13. Contrôleur (150) selon la revendication 12, dans lequel le processeur est configuré pour mettre en oeuvre une réduction de la largeur de bande sur l'au moins un des flux de données existants en envoyant une instruction à un ou plusieurs correspondants (130, 131, 132) de transmettre l'au moins un flux parmi les flux de données existants à l'aide d'une largeur de bande plus faible.

14. Contrôleur (150) selon les revendications 12 ou 13, dans lequel les informations associées aux flux de données existants sont enregistrées sur une table (200) dans la mémoire, la table (200) incluant une pluralité de rangées (230, 232, 234) et de colonnes (202, 204, 206, 208, 210, 212).

15. Contrôleur (150) selon la revendication 12, dans lequel le processeur est en outre configuré pour :
enregistrer les informations associées aux flux de données existants ;
identifier un ou plusieurs flux de données de priorité plus faible parmi les flux de données existants ayant la priorité la plus faible, l'identification étant basée sur les informations enregistrées ; et
terminer au moins un des un ou plusieurs flux de données de priorité plus faible sur la base d'au moins un des un ou plusieurs flux de données de priorité plus faible identifiés.
